# EUROPÄISCHE PATENTSCHRIFT

(11) **EP 2 366 033 B1**
(45) Veröffentlichungstag und Bekanntmachung des Hinweises auf die Patenterteilung: **17.07.2013**
(21) Anmeldenummer: 09755895.1
(22) Anmeldetag: 17.11.2009
(51) Int. Cl.: C21C 5/46, C21C 5/52, F27B 3/28, F27D 19/00, F27D 21/00

(54) **SCHMELZOFEN**
MELTING FURNACE
FOUR DE FUSION

(30) Priorität: 15.12.2008 DE 102008062256; 17.07.2009 DE 102009034353
(43) Veröffentlichungstag der Anmeldung: 21.09.2011
(73) Patentinhaber: Siemens Aktiengesellschaft, 80333 München (DE)
(72) Erfinder: KRÜGER, Klaus, 22179 Hamburg (DE); LEADBETTER, Sascha, 80801 München (DE); RIEGER, Detlef, 85598 Baldham (DE)
(86) Internationale Anmeldenummer: PCT/EP2009/065317
(87) Internationale Veröffentlichungsnummer: WO 2010/072471

(56) Entgegenhaltungen:
- JP-A- 9 159 511
- MATSCHULLAT T ET AL: "Foaming Slag and Scrap Metal Behaviour in Electric Arc Furnace - A New and Very Precise Detection Method with Automatic Carbon Control" ARCHIVES OF METALLURGY AND MATERIALS, AKADEMIA GORNICZO-HUTNICZA IM. STANISLAWA STASZICA, POLAND, Bd. 53, Nr. 2, 1. März 2008 (2008-03-01), Seiten 399-403, XP002528409 ISSN: 1733-3490

## Beschreibung

Die Erfindung bezieht sich auf einen Schmelzofen und ein Verfahren zu dessen Betrieb.

Schmelzöfen und Verfahren zu deren Betrieb sind beispielsweise aus der deutschen Offenlegungsschrift DE 10 2005 034 378 A1 sowie der deutschen Patentschrift DE 10 2005 034 409 B3 bekannt.

Bei der Herstellung von Stahl in Schmelzöfen verhindern die Temperaturen und die raue Umgebung die Messung und Charakterisierung des Ofeninhalts während des Schmelzprozesses. Wird beispielsweise zum Schmelzen von Schrott verschiedener Stahlschrottsorten ein Elektrolichtbogenofen eingesetzt, so schmilzt der Schrott im Wirkungsbereich der Lichtbögen (Strahlung), die üblicherweise mit drei Elektroden erzeugt werden. Da während des Betriebs des Elektrolichtbogenofens die Lichtbogenlänge üblicherweise konstant gehalten wird, bohren sich die Lichtbögen/Elektroden in den Schrott hinein. Durch ein Nachrutschen von den Seiten und Schrotteinstürze wird sukzessiv der gesamte Schrott eingeschmolzen. Dieser Prozess ist sowohl zeitlich als auch räumlich sehr inhomogen, da die Schrottfüllung sehr ungleichmäßig sein kann und Feinschrott wie auch Schwerschrott mit massiven Teilen, sogenannten Knüppeln oder Bären, enthalten kann.

Da der Schmelzfortschritt durch den geschlossenen Ofen nicht beobachtet werden kann, wird bei vorbekannten Schmelzöfen der durch die sekundäre Außenleiterspannung und den Sollstrom definierte elektrische Arbeitspunkt über ein starres Fahrdiagramm vorgegeben. Ein solches Fahrdiagramm kann beispielsweise die Transformatorstufe und den Impedanzsollwert der Elektrodenregelung in Abhängigkeit von der Schmelzzeit oder der eingebrachten Energie festlegen. Die Elektrodenregelung kann beispielsweise auf Basis der Strangimpedanz erfolgen, um eine konstante Lichtbogenlänge zu erzielen.

Ein Nachteil starrer Fahrdiagramme besteht darin, dass die elektrischen Betriebsmittel stark belastet werden und dementsprechend für sehr hohe Belastungen ausgelegt sein müssen: Kommt es im Schmelzverlauf beispielsweise zu Schrottstürzen, so können die damit einhergehenden Kurzschlüsse zwischen den Elektroden ein schnelles Heben der Elektroden auslösen, wodurch es zu einem Abreißen des Lichtbogens kommen kann. Dies und das erneute Zünden der Lichtbögen belasten die elektrischen Betriebsmittel erheblich.

Ein weiterer Nachteil starrer Fahrdiagramme bzw. Fahrprogramme zum Steuern eines Elektrolichtbogenofens besteht darin, dass diese je nach Auslegung entweder die verfügbare Schmelzleistung nicht voll ausnutzen können oder einen erhöhten Feuerfestverschleiß und erhöhte thermische Verluste in Kauf nehmen müssen.

Aus dem japanischen Abstract 09159511 A ist ein Schmelzofen mit den Merkmalen gemäß dem Oberbegriff des Anspruchs 1 bekannt.

Der Erfindung liegt die Aufgabe zugrunde, einen Schmelzofen anzugeben, der eine verbesserte Prozessführung ermöglicht.

Diese Aufgabe wird erfindungsgemäß durch einen Schmelzofen mit den Merkmalen gemäß Patentanspruch 1 gelöst. Vorteilhafte Ausgestaltungen des erfindungsgemäßen Schmelzofens sind in Unteransprüchen angegeben.

Danach ist erfindungsgemäß vorgesehen, dass der Schwingungserreger dem Sensor derart gegenüberliegt, dass ein Anteil der Schwingungen oder Schallwellen des Schwingungserregers durch das im Ofengefäß befindliche Schmelzgut zu dem Sensor gelangt, wobei der Schwingungserreger derart ausgestaltet ist, dass er als externe Anregung Schwingungsimpulse oder eine Schwingungsfrequenz, die als Rampe kontinuierlich verändert ist, erzeugt und wobei die Signalerfassungs- und Berechnungseinheit derart ausgestaltet ist, dass sie die Laufzeit der Schwingungsimpulse und/oder die Signalintensität der vom Sensor gemessenen Messimpulse erfasst oder eine Übertragungsfunktion bildet, die die Schwingungsübertragung zwischen der Stelle der externen Anregung und dem gegenüberliegenden Sensor angibt, und durch Auswerten der Laufzeit und/oder der Signalintensität oder durch Auswerten der Übertragungsfunktion auf die Lage des Schmelzgutes, die Art des Schmelzgutes oder die Verteilung des Schmelzgutes im Ofengefäß schließt.

Ein wesentlicher Vorteil des erfindungsgemäßen Schmelzofens ist darin zu sehen, dass bei diesem der Schmelzvorgang überwachbar ist und der Schmelzfortschritt messbar wird, indem die Signale der Schwingungserregung nach dem Durchlaufen durch das Ofeninnere mit dem Sensor gemessen und mit der Signalerfassungs- und Berechnungseinheit ausgewertet werden. Dies ermöglicht es beispielsweise, eine prozessgeführte, zustandsorientierte Regelung des Schmelzprozesses durchzuführen und die Lichtbogenleistung optimal an den jeweiligen Zustand des Schmelzprozesses anzupassen. Beispielsweise kann dies über eine Vorgabe der Transformator- und Drosselstufe, der Drehstromarbeitspunkte und/oder über präventive Eingriffe der Elektrodenbewegung erfolgen. Auch können beispielsweise die besten Chargierzeitpunkte ermittelt werden.

Gemäß einer besonders bevorzugten Ausgestaltung ist vorgesehen, dass die Signalerfassungs- und Berechnungseinheit geeignet ist, das Signal des Sensors mit dem Anregungssignal des Schwingungserregers zu korrelieren und/oder durch kombinierte Auswertung der Schwingungsanregung und der gemessenen Vibration auf den Schmelzvorgang zu schließen.

Vorzugsweise sind die Ansteuerungseinheit und/oder der Schwingungserreger geeignet, Schwingungsimpulse mit einer Impulsdauer von 10 Millisekunden, besonders bevorzugt von 1 Millisekunde, oder kürzer zu erzeugen.

Alternativ oder zusätzlich können die Ansteuerungseinheit und/oder der Schwingungserreger geeignet sein, die Schwingungsfrequenz in einem Bereich zwischen 10 Hz und 20 kHz zu variieren.

Mit der Signalerfassungs- und Berechnungseinheit steht vorzugsweise eine Regeleinrichtung in Verbindung, die Regelgrö-βen für die Regelung des Schmelzvorganges erzeugen kann. Mit Blick auf die Anordnung der Schwingungserreger und der Sensoren wird es als vorteilhaft angesehen, wenn jedem Schwingungserreger ein gegenüberliegender Sensor zugeordnet ist.

Die Erfindung bezieht sich darüber hinaus auf ein Verfahren zum Betreiben eines Schmelzofens, wobei eine externe Anregung des Ofengefäßes mit Schwingungen erfolgt, eine durch die externe Anregung entstehende Vibration gemessen wird und die Schwingungsanregung und die gemessene Vibration ausgewertet werden, und wobei ein Anteil der Schwingungen oder Schallwellen des Schwingungserregers durch das im Ofengefäß befindliche Schmelzgut zu einem dem Schwingungserreger gegenüberliegenden Sensor geleitet wird, mit dem Schwingungserreger als externe Anregung Schwingungsimpulse oder eine Schwingungsfrequenz, die als Rampe kontinuierlich verändert ist, erzeugt werden, die Laufzeit der Schwingungsimpulse und/oder die Signalintensität der vom Sensor gemessenen Messimpulse erfasst oder eine Übertragungsfunktion gebildet wird, die die Schwingungsübertragung zwischen der Stelle der externen Anregung und dem gegenüberliegenden Sensor angibt, und durch Auswerten der Laufzeit und/oder der Signalintensität oder durch Auswerten der Übertragungsfunktion auf die Lage des Schmelzgutes, die Art des Schmelzgutes oder die Verteilung des Schmelzgutes im Ofengefäß geschlossen wird.

Bezüglich der Vorteile des erfindungsgemäßen Verfahrens sei auf die obigen Ausführungen im Zusammenhang mit dem erfindungsgemäßen Schmelzofen verwiesen, da die Vorteile des erfindungsgemäßen Verfahrens denen des erfindungsgemäßen Schmelzofens im Wesentlichen entsprechen.

Vorzugsweise werden bei der Auswertung die Vibration und die externe Anregung korreliert.

Vorzugsweise werden Schwingungsimpulse mit einer Impulsdauer von maximal 10 Millisekunden, besonders bevorzugt von maximal 1 Millisekunde, erzeugt.

Die Erfindung bezieht sich außerdem auf eine Signalerfassungs- und Berechnungseinheit für einen Schmelzofen, die geeignet ist, ein Verfahren - wie es oben beschrieben ist - durchzuführen.

Die Erfindung wird nachfolgend anhand von Ausführungsbeispielen näher erläutert; dabei zeigen beispielhaft
- Figur 1: ein Ausführungsbeispiel für einen erfindungsgemä-βen Schmelzofen in einer schematischen Darstellung,
- Figur 2: den Schmelzofen gemäß Figur 1 in einer Sicht von oben,
- Figur 3: den Schmelzofen gemäß Figur 1 in einer Sicht von der Seite,
- Figur 4: die Ausbreitung von Schwingungen in dem Schmelzofen gemäß Figur 1 und
- Figur 5: den zeitlichen Verlauf von mechanischen Anregungsimpulsen und den zugehörigen Messimpulsen.

In den Figuren werden der Übersicht halber für identische oder vergleichbare Komponenten stets dieselben Bezugszeichen verwendet.

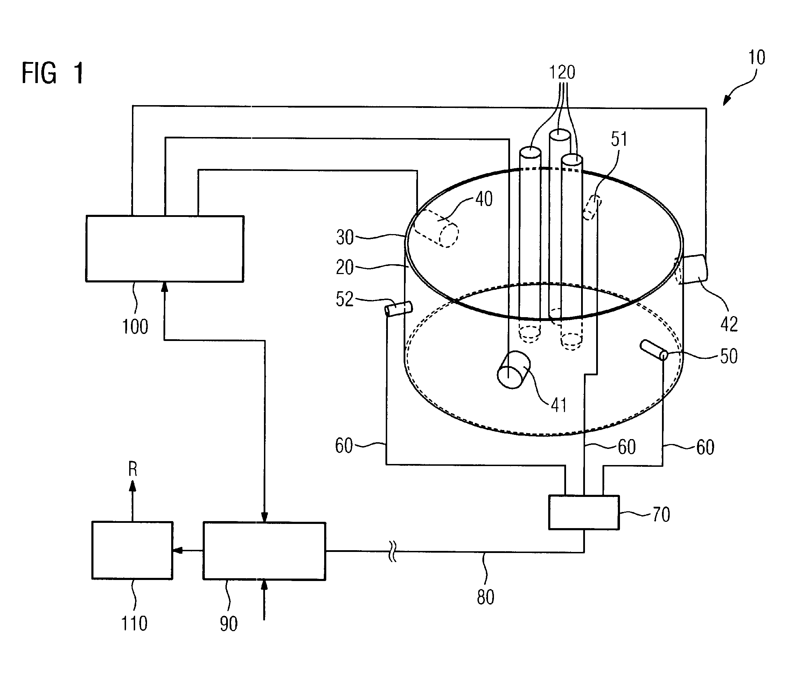

In der Figur 1 erkennt man einen Schmelzofen 10, der ein Ofengefäß 20 aufweist. Außen an der Ofenwand 30 des Ofengefä-βes 20 sind drei Schwingungserreger 40, 41 und 42 angeordnet. Die Anordnung der Schwingungserreger 40, 41 und 42 an der Ofenwand 30 erfolgt vorzugsweise drehsymmetrisch mit einem Drehwinkel von 120° und 240°.

Bei den Schwingungserregern 40, 41 und 42 handelt es sich vorzugsweise um Inertialschwingungserreger bzw. Inertialerreger.

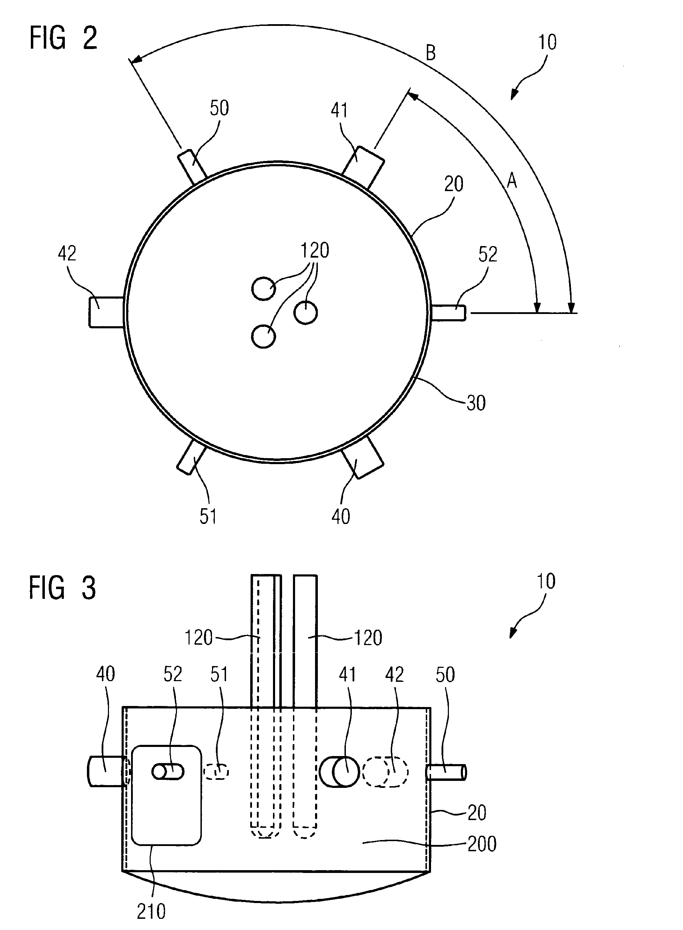

In der Figur 1 kann man darüber hinaus erkennen, dass außen an der Ofenwand 30 des Ofengefäßes 20 drei Sensoren 50, 51 und 52 angebracht sind. Die drei Sensoren 50, 51 und 52 sind an der Ofenwand 30 ebenfalls drehsymmetrisch mit einem Drehwinkel von 120° und 240° angeordnet, wie in der Figur 2 ersichtlich ist (B=120°, A=60°).

Die Anordnung der Sensoren 50, 51 und 52 relativ zu den Schwingungserregern 40, 41 und 42 ist vorzugsweise derart gewählt, dass sich Sensoren und Schwingungserreger paarweise gegenüberliegen. So lässt sich in der Figur 1 erkennen, dass der Sensor 50 dem Schwingungserreger 40, der Sensor 51 dem Schwingungserreger 41 und der Sensor 52 dem Schwingungserreger 42 gegenüberliegt.

Die drei Sensoren 50, 51 und 52 sind über geschützte Leitungen 60, die beispielsweise in Kabelführungen verlegt sind, mit einer Verstärker- und Umsetzereinheit 70 verbunden. Der Verstärker- und Umsetzereinheit 70 über einen Lichtwellenleiter 80 nachgeordnet ist eine Signalerfassungs- und Berechnungseinheit 90.

Die Signalerfassungs- und Berechnungseinheit 90 steht außerdem (zum Beispiel über geschützte Leitungen) mit einer Ansteuerungseinheit 100 in Verbindung, bei der es sich beispielsweise um einen Schwingungserzeugeranreger, zum Beispiel in Form eines Leistungsverstärkers, handeln kann. Die Ansteuerungseinheit 100 ist (zum Beispiel über geschützte Leitungen) ausgangsseitig mit den drei Schwingungserregern 40, 41 und 42 verbunden und steuert diese in Abhängigkeit von Steuersignalen der Signalerfassungs- und Berechnungseinheit 90 an.

Die Signalerfassungs- und Berechnungseinheit 90 ist ausgangsseitig darüber hinaus mit einer Regeleinrichtung 110 verbunden, die Regelgrößen R zur Steuerung des Schmelzprozesses im Schmelzofen 10 erzeugen kann. Die Regelgrößen R können beispielsweise für einen Transformator, eine Drossel, Elektrodenbewegungen, Chargierzeitpunkte und/oder die Zugabe von Medien erzeugt werden.

In der Figur 2 ist die Anordnung der drei Sensoren 50, 51 und 52 sowie der drei Schwingungserreger 40, 41 und 42 noch einmal in einer Draufsicht gezeigt. Man erkennt die symmetrische Anordnung der Sensoren und der Schwingungserreger sowie die Tatsache, dass die Sensoren den Schwingungserregern räumlich gegenüberliegen. Mittig im Ofengefäß 20 des Schmelzofens 10 angeordnet sind drei Elektroden 120, mit denen die zum Schmelzen des Schmelzgutes erforderliche Schmelzenergie in das Ofengefäß 20 eingespeist wird.

In der Figur 3 ist das Ofengefäß 20 in einer Sicht von der Seite in einer transparenten Darstellung gezeigt. Man erkennt den Schwingungserreger 40 sowie den zugeordneten Sensor 50. In der Mitte des Ofengefäßes 20 sind die drei Elektroden 120 erkennbar. Außerdem ist schematisch das geschmolzene Schmelzgut mit einem Bezugszeichen 200 gekennzeichnet. Es lässt sich außerdem erkennen, dass in dem geschmolzenen Schmelzgut 200 Schrott mit höherer Dichte vorhanden ist, der einen Dichtesprung hervorruft. Der Schrott mit der höheren Dichte ist mit dem Bezugszeichen 210 gekennzeichnet.

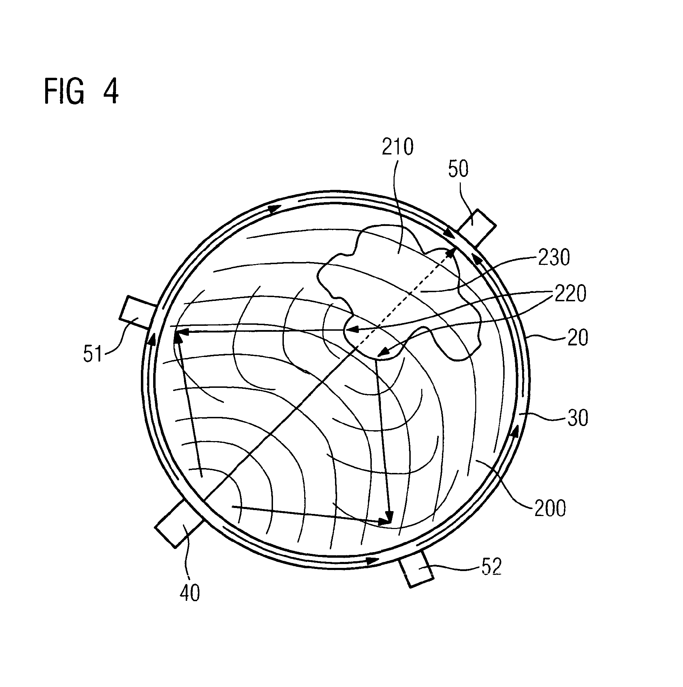

In der Figur 4 ist beispielhaft die Ausbreitung von Schwingungen in Form von Schallwellen gezeigt, die von den Schwingungserregern 40 erzeugt werden. Man erkennt, dass ein Anteil der Schwingungen bzw. Schallwellen über die Ofenwand 30 zu den Sensoren 50, 51 und 52 geleitet wird. Der andere Anteil der Schwingungen bzw. Schallwellen gelangt durch das Schmelzgut 200 unmittelbar oder über Reflexionen zu den Sensoren 50, 51 und 52.

In der Figur 4 lässt sich erkennen, dass der Schrott 210 mit der höheren Dichte sowohl zu einer erhöhten Absorption der Schwingungen bzw. Schallwellen als auch zu Reflexionen der Schwingungen bzw. Schallwellen innerhalb des Ofengefäßes 20 führt. Die Absorption wird hauptsächlich im Inneren 230 der Bereiche 210 hervorgerufen, und die Reflexionen werden hauptsächlich an den Dichtegrenzen 220 hervorgerufen.

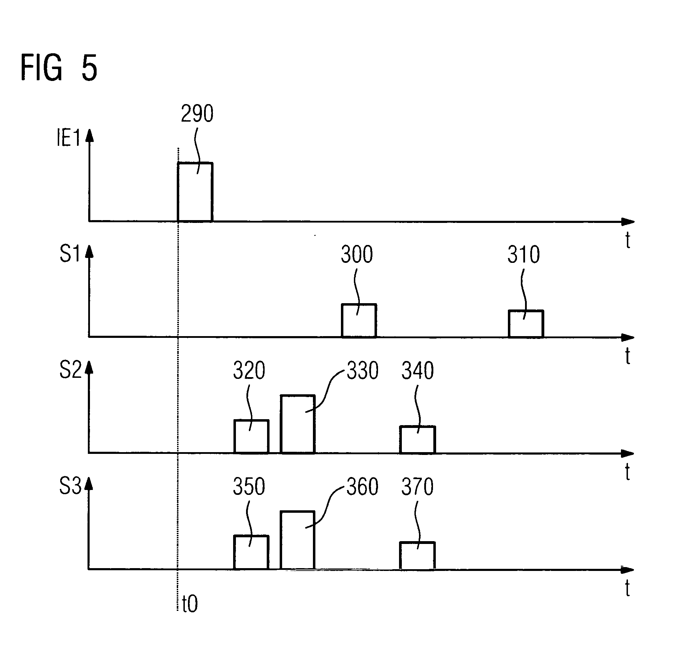

In der Figur 5 ist beispielhaft der zeitliche Verlauf eines Schwingungsimpulses 290 des Anregungssignals IE1 gezeigt; der Schwingungsimpuls 290 wird von dem Schwingungserreger 40 zum Zeitpunkt t0 erzeugt.

Darüber hinaus erkennt man in der Figur 5 die Messsignale S1, S2 und S3, die von den Sensoren 50, 51 und 52 gemessen werden. So lässt sich erkennen, dass der dem Schwingungserreger 40 gegenüberliegende Sensor 50 im Falle einer Anregung des Schmelzofens 10 mit dem Schwingungsimpuls 290 zwei Messimpulse 300 und 310 misst (Messsignal S1). Der Sensor 51 misst ein Messsignal S2, das drei Messimpulse 320, 330 und 340 aufweist. Der Sensor 52 empfängt im Messsignal S3 beispielsweise ebenfalls drei Messimpulse, die in der Figur 5 mit den Bezugszeichen 350, 360 und 370 gekennzeichnet sind.

Durch Auswertung der Messimpulse der drei Sensoren 50, 51 und 52 - unter weiterer Berücksichtigung der Anregungssignale der Schwingungserreger 40, 41 und 42 - kann die Signalerfassungs- und Berechnungseinheit 90 auf den Prozesszustand innerhalb des Ofengefäßes 20 schließen und den Schmelzprozess entsprechend steuern. Dies soll nachfolgend noch detaillierter erläutert werden.

Wie bereits oben erwähnt, wird bei dem Schmelzofen 10 gemäß den Figuren 1 bis 4 eine externe Anregung des Ofengefäßes 20 mit Schwingungen an einer Stelle der Ofenwand mit der Erfassung der Schwingungen bzw. des entsprechenden Körperschalls an der gegenüberliegenden Seite oder einer beliebigen anderen Stelle des Gefäßes kombiniert. Durch eine kombinierte bzw. korrelierte Auswertung der Schwingungsanregung und der gemessenen Schwingungen bzw. Körperschallsignale kann nachfolgend unter anderem auf den Inhalt des Ofens geschlossen werden, beispielsweise wenn Schallreflexionen innerhalb des Schmelzgutes auf das Vorhandensein von Dichteschwankungen schließen lassen.

Zur Einbringung der Schwingungen werden die Schwingungserreger 40, 41 und 42 eingesetzt, die vorzugsweise so an der Ofenwand 30 angebracht sind, dass sie in einer definierten Position zu den Sensoren 50, 51 und 52 stehen. Die Sensoren 50, 51 und 52 können beispielsweise durch Beschleunigungssensoren und/oder Körperschallsensoren gebildet sein. Zur Erzeugung der Schwingungen können ein, zwei oder drei oder auch mehr Schwingungserreger verwendet werden. Die Ansteuerung der Schwingungserreger erfolgt über die Ansteuerungseinheit 100, die wiederum von der Signalerfassungs- und Berechnungseinheit 90 gesteuert wird.

Die an der Ofenwand 30 entstehende Vibration wird von den Sensoren 50, 51 und 52 gemessen, und es werden die Signale über die geschützten Leitungen 60 in die zentrale Verstärker- und Umsetzereinheit 70 nahe am Ofengefäß 20 geführt und nachfolgend weiter über den Lichtwellenleiter 80 störungsfrei über längere Distanzen, die beispielsweise 100 m oder mehr betragen können, in die Signalerfassungs- und Berechnungseinheit 90 geleitet. Dort werden die Signale beispielsweise mit einer ausreichend hohen Samplingrate (z. B. 10.000 bis 50.000 Abtastungen pro Sekunde) digitalisiert und durch Auswertealgorithmen mit den Anregungssignalen der Schwingungserreger 40, 41 und 42 korreliert. Es findet also vorzugsweise eine kombinierte Auswertung der Schwingungsanregung und der gemessenen Körperschallsignale statt.

Um nun Informationen über den Schrottinhalt und die Verteilung im Ofen zu erhalten, gibt es verschiedene Mess- und Auswertemöglichkeiten, die nachfolgend beispielhaft erläutert werden sollen:

Gemäß einer ersten bevorzugten Variante ist vorgesehen, dass die Schwingungserreger 40, 41 und 42 kurze Impulse aussenden, die vorzugsweise jeweils kürzer als eine Millisekunde sind. Dies zeigt beispielhaft die Figur 5 mit dem Anregungssignal IE1 des Schwingungserregers 50. Werden mehrere Schwingungserreger verwendet, wie dies bei dem Ausführungsbeispiel gemäß den Figuren 1 bis 5 der Fall sein kann, werden die Impulse vorzugsweise zeitlich versetzt ausgesendet, so dass jederzeit eine genaue Zuordnung der Messsignale zu den Schwingungserregern 40, 41 und 42 möglich ist. Die Sensoren 50, 51 und 52 registrieren zeitverzögert entsprechend den Schalllaufzeiten (Schwingungslaufzeiten) die eintreffenden Schwingungsimpulse an der Ofenwand 30. Dies ist in der Figur 4 schematisch skizziert. Es gibt verschiedene Wege für die Schallausbreitung. Der Schall kann sich durch die Ofenwand 30 und über den im Ofen befindlichen Schrott (Schmelzgut) ausbreiten. Dabei kann es zu Reflexionen kommen, wie dies in der Figur 4 beispielhaft angedeutet ist. Die verschiedenen Schallausbreitungswege haben verschiedene Laufzeiten und Signalintensitäten zur Folge, sowohl zeitlich als auch lokal für die einzelnen Sensoren. Aus den Signalen der Sensoren 50, 51 und 52 und den jeweiligen Referenzsignalen - bei einem leeren Ofen - kann durch Auswertung der zeitlichen Abstände zwischen den Signalpeaks (Signalspitzen) und der Intensität (Höhe) der Signalpeaks auf die Schrottart und die Schrottverteilung geschlossen werden. Beispielsweise ist es möglich, grob eine Ortsangabe über die Lage des Schwerschrottes zu errechnen, da Schwerschrott eine höhere Dichte als normaler Schrott aufweist und daher zu erhöhter Reflexion wie auch zu erhöhter oder verringerter (je nach Frequenz) Absorption der Schallwellen führt. Ebenso kann die Abschirmung der Gefäßinnenwand, also der Innenseite der Ofenwand 30 des Ofengefäßes 20, durch Schrott quantifiziert werden.

Gemäß einer anderen bevorzugten Ausgestaltung des Verfahrens ist vorgesehen, dass die Schwingungserreger 40, 41 und 42 eine Schwingungsfrequenz aussenden und über die Ofenwand 30 in das Ofengefäß 20 einspeisen, die z. B. als Rampe kontinuierlich von einer unteren Frequenz bis zu einer oberen Frequenz oder umgekehrt von einer oberen Frequenz zu einer unteren Frequenz verändert wird. Die untere Frequenz kann beispielsweise ca. 10 Hz und die obere Frequenz beispielsweise ca. 20 kHz betragen.

Werden mehrere Schwingungserreger 40, 41 und 42 verwendet, so werden diese vorzugsweise nacheinander betrieben. Aus der Kenntnis der Erregerschwingung, also der durch die Schwingungserreger hervorgerufenen Schwingung, kann für jeden der drei Sensoren 50, 51 und 52 eine Schallübertragungsfunktion H(ω) berechnet werden. Diese komplexe Funktion wird für jeden der drei Sensoren 50, 51 und 52 einen charakteristischen Verlauf als Funktion der Frequenz ω in Abhängigkeit von den verschiedenen Schrottfüllungen im Inneren des Ofengefäßes 20 besitzen, da unterschiedliche Schrottarten und deren Verteilung im Ofengefäß 20 den Schalltransport abhängig von der Frequenz unterschiedlich beeinflussen, also unterschiedlich zeitlich verzögern, dämpfen und/oder reflektieren werden. In vorab durchzuführenden Referenzmessungen werden hierzu für verschiedene Schrottarten, Schrottbefüllungen und für den jeweiligen Schmelzfortschritt charakteristische Referenzfunktionen für die Schallübertragungsfunktion H(ω) bestimmt. Durch Vergleich der beim nachfolgenden Betrieb des Schmelzofens 10 zu messenden Schallübertragungsfunktionen H(ω) mit den zuvor aufgenommenen charakteristischen Referenzfunktionen H(ω) kann dann der aktuelle Ofeninhalt, wie Schrottart und grob die Verteilung sowie der Schmelzfortschritt, bestimmt werden. Die entsprechende Auswertung kann bei dem Ausführungsbeispiel gemäß Figur 1 durch die Signalerfassungs- und Berechnungseinheit 90 durchgeführt werden, da diese sowohl die Messsignale der drei Sensoren 50, 51 und 52 als auch die entsprechenden Anregungssignale kennt, die von den Schwingungserregern 40, 41 und 42 über die Ofenwand 30 in das Ofengefäß 20 eingekoppelt werden.

Die Kenntnis des aktuellen Ofeninhalts und die Kenntnis der Verteilung sowie des Schmelzfortschritts bzw. der Abschirmung der Gefäßwand eröffnet die Möglichkeit für einen optimierten automatischen Betrieb. Hierzu ist die Regeleinrichtung 110 vorgesehen, die eingangsseitig mit der Signalerfassungs- und Berechnungseinheit 90 verbunden ist und ausgangsseitig die Regelgrößen R für die Steuerung des Schmelzprozesses erzeugt. Vorzugsweise führt die Regeleinrichtung 110 eine prozessgeführte, zustandsorientierte Regelung für einen optimierten Schmelzprozess durch. Beispielsweise erfolgen eine Regelung der Transformator- und Drosselstufen sowie der Stromarbeitspunkte der drei Phasen sowie ggf. präventive Eingriffe der Elektrodenbewegungen. Damit kann über die Optimierung des Energieeintrages eine Reduzierung des spezifischen Energiebedarfs und der Schmelzdauer erzielt werden, ebenso wie eine Verringerung des Gefäßverschleißes. Außerdem können die jeweils besten Chargierzeitpunkte ermittelt werden.

Zusammengefasst ermöglicht es der beispielhaft erläuterte Schmelzofen 10 gemäß den Figuren 1 bis 5, den Schmelzfortschritt messbar zu machen und eine prozessgeführte, zustandsorientierte Regelung durchzuführen, mit der die Lichtbogenleistung, die durch die Elektroden 120 in den Schmelzofen eingebracht wird, optimal dem aktuellen Zustand des Prozesses anpasst wird.

## Patentansprüche

1. Schmelzofen (10) mit
- mindestens einem Schwingungserreger (40, 41, 42), der an einem Ofengefäß (20) angebracht ist,
- mindestens einem Sensor (50, 51, 52), der an dem Ofengefäß (20) angebracht ist, und
- einer Signalerfassungs- und Berechnungseinheit (90), die mit dem mindestens einen Schwingungserreger und dem mindestens einen Sensor in Verbindung steht,
**dadurch gekennzeichnet, dass**
- der Schwingungserreger dem Sensor derart gegenüberliegt, dass ein Anteil der Schwingungen oder Schallwellen des Schwingungserregers durch das im Ofengefäß befindliche Schmelzgut zu dem Sensor gelangt,
- der Schwingungserreger derart ausgestaltet ist, dass er als externe Anregung Schwingungsimpulse oder eine Schwingungsfrequenz, die als Rampe kontinuierlich verändert ist, erzeugt,
- die Signalerfassungs- und Berechnungseinheit derart ausgestaltet ist, dass sie die Laufzeit der Schwingungsimpulse und/oder die Signalintensität der vom Sensor gemessenen Messimpulse erfasst oder eine Übertragungsfunktion bildet, die die Schwingungsübertragung zwischen der Stelle der externen Anregung und dem gegenüberliegenden Sensor angibt, und durch Auswerten der Laufzeit und/oder der Signalintensität oder durch Auswerten der Übertragungsfunktion auf die Lage des Schmelzgutes, die Art des Schmelzgutes oder die Verteilung des Schmelzgutes im Ofengefäß schließt.

2. Schmelzofen nach Anspruch 1,
**dadurch gekennzeichnet, dass** der Schwingungserreger geeignet ist, einen Schwingungsimpuls mit einer Impulsdauer von 10 Millisekunden oder kürzer zu erzeugen.

3. Schmelzofen nach einem der voranstehenden Ansprüche,
**dadurch gekennzeichnet, dass** der Schwingungserreger geeignet ist, die Schwingungsfrequenz in einem Bereich zwischen 10 Hz und 20 kHz zu variieren.

4. Schmelzofen nach einem der voranstehenden Ansprüche,
**dadurch gekennzeichnet, dass** mit der Signalerfassungs- und Berechnungseinheit eine Regeleinrichtung in Verbindung steht, die Regelgrößen für die Regelung des Schmelzvorganges erzeugen kann.

5. Schmelzofen nach einem der voranstehenden Ansprüche,
**dadurch gekennzeichnet, dass** jedem Schwingungserreger ein gegenüberliegender Sensor zugeordnet ist.

6. Verfahren zum Betreiben eines Schmelzofens (10), wobei
- eine externe Anregung des Ofengefäßes mit Schwingungen erfolgt,
- eine durch die externe Anregung entstehende Vibration gemessen wird und
- die Schwingungsanregung und die gemessene Vibration ausgewertet werden,
**dadurch gekennzeichnet, dass**
- ein Anteil der Schwingungen oder Schallwellen des Schwingungserregers durch das im Ofengefäß befindliche Schmelzgut zu einem dem Schwingungserreger gegenüberliegenden Sensor geleitet wird,
- mit dem Schwingungserreger als externe Anregung Schwingungsimpulse oder eine Schwingungsfrequenz, die als Rampe kontinuierlich verändert ist, erzeugt werden,
- die Laufzeit der Schwingungsimpulse und/oder die Signalintensität der vom Sensor gemessenen Messimpulse erfasst oder eine übertragungsfunktion gebildet wird, die die Schwingungsübertragung zwischen der Stelle der externen Anregung und dem gegenüberliegenden Sensor angibt, und durch Auswerten der Laufzeit und/oder der Signalintensität oder durch Auswerten der Übertragungsfunktion auf die Lage des Schmelzgutes, die Art des Schmelzgutes oder die Verteilung des Schmelzgutes im Ofengefäß geschlossen wird.

## Claims

1. Melting furnace (10) with
- at least one vibration inducer (40, 41, 42), which is installed on a furnace vessel (20),
- at least one sensor (50, 51, 52), which is installed on the furnace vessel (20), and
- a signal recording and calculation unit (90), which is connected to the at least one vibration inducer and the at least one sensor,
**characterized in that**
- the vibration inducer lies opposite the sensor in such a way that one component of the vibrations or soundwaves of the vibration inducer passes through the material being melted that is in the furnace vessel to the sensor,
- the vibration inducer is designed in such a way that it generates as external excitation vibration pulses or a vibration frequency, which is changed continuously as a ramp,
- the signal recording and calculation unit is designed in such a way that it records the travel time of the vibration pulses and/or the signal intensity of the measuring pulses measured by the sensor or forms a transmission function, which indicates the vibration transmission between the point of external excitation and the sensor lying opposite, and draws conclusions about the position of the material being melted, the type of material being melted or the distribution of the material being melted in the furnace vessel by evaluating the travel time and/or the signal intensity or by evaluating the transmission function.

2. Melting furnace according to Claim 1, **characterized in that** the vibration inducer is suitable for generating a vibration pulse with a pulse duration of 10 milliseconds or shorter.

3. Melting furnace according to one of the preceding claims, **characterized in that** the vibration inducer is suitable for varying the vibration frequency in a range between 10 Hz and 20 kHz.

4. Melting furnace according to one of the preceding claims, **characterized in that** connected to the signal recording and calculation unit is a regulating device, which can generate controlled variables for regulating the melting process.

5. Melting furnace according to one of the preceding claims, **characterized in that** each vibration inducer is assigned an opposite sensor.

6. Method for operating a melting furnace (10),
- an external excitation of the furnace vessel taking place by vibrations,
- a vibration produced by the external excitation being measured and,
- the vibration excitation and the measured vibration being evaluated,
**characterized in that**
- one component of the vibrations or soundwaves of the vibration inducer is passed through the material being melted that is in the furnace vessel to a sensor lying opposite the vibration inducer,
- vibration pulses or a vibration frequency, which is changed continuously as a ramp, being generated by the vibration inducer as external excitation,
- the travel time of the vibration pulses and/or the signal intensity of the measuring pulses measured by the sensor being recorded or a transmission function being formed, indicating the vibration transmission between the point of external excitation and the sensor lying opposite, and conclusions being drawn about the position of the material being melted, the type of material being melted or the distribution of the material being melted in the furnace vessel by evaluating the travel time and/or the signal intensity or by evaluating the transmission function.

## Revendications

1. Four ( 10 ) de fusion comprenant
- au moins un excitateur ( 40, 41, 42 ) d'oscillations, qui est mis sur l'enceinte ( 20 ) du four,
- au moins un capteur ( 50, 51, 52 ), qui est mis sur l'enceinte ( 20 ) du four, et
- une unité ( 90 ) de détection du signal et de calcul, qui est en liaison avec le au moins un excitateur d'oscillations et le au moins un capteur,
**caractérisé en ce que**
- l'excitateur d'oscillations fait face au capteur, de manière à ce qu'une partie des oscillations ou des ondes sonores de l'excitateur d'oscillations arrive au capteur en passant par le produit fondu se trouvant dans l'enceinte du four,
- l'excitateur d'oscillations est conformé de manière à produire comme excitation extérieure des impulsions d'oscillations ou une fréquence d'oscillations, qui est modifiée continuellement sous la forme d'une rampe,
- l'unité de détection du signal et de calcul est conformée de manière à détecter le temps de propagation des impulsions d'oscillations et/ou l'intensité du signal des impulsions de mesure mesurées par le capteur ou à former une fonction de transfert, qui indique la transmission d'oscillations entre le point de l'excitation extérieure et le capteur se trouvant en face et, en exploitant le temps de parcours et/ou l'intensité du signal ou en exploitant la fonction de transfert, à déduire la position du produit fondu, la nature du produit fondu ou la répartition du produit fondu dans l'enceinte du four.

2. Four de fusion suivant la revendication 1,
**caractérisé en ce que**
l'excitateur d'oscillations est propre à produire une impulsion d'oscillations d'une durée de 10 millisecondes ou plus courte.

3. Four de fusion suivant l'une des revendications précédentes,
**caractérisé en ce que**
l'excitateur d'oscillations est propre à faire varier la fréquence d'oscillations dans une plage comprise entre 10 Hz et 20 kHz.

4. Four de fusion suivant l'une des revendications précédentes,
**caractérisé en ce que**
un dispositif de régulation, qui peut produire des grandeurs de régulation pour la régulation de l'opération de fusion, est en liaison avec l'unité de détection du signal et de calcul.

5. Four de fusion suivant l'une des revendications précédentes,
**caractérisé en ce qu'**un capteur lui faisant face est associé à chaque excitateur d'oscillations.

6. Procédé pour faire fonctionner un four ( 10 ) de fusion, dans lequel
- on effectue une excitation extérieure de l'enceinte du four par des oscillations,
- on mesure une vibration créée par l'excitation extérieure et
- on exploite l'excitation d'oscillations et la vibration mesurée,
**caractérisé en ce que**
- on envoie une partie des oscillations ou des ondes sonores d'excitateur d'oscillations à un capteur se trouvant en face de l'excitateur d'oscillations en les faisant passer par le produit fondu se trouvant dans l'enceinte du four,
- on produit par l'excitateur d'oscillations comme excitation extérieure des impulsions d'oscillations ou une fréquence d'oscillations, qui est modifiée continuellement sous la forme d'une rampe,
- on détecte le temps de parcours des impulsions d'oscillations et/ou l'intensité de signal des impulsions de mesure mesurées par le capteur ou on forme une fonction de transfert, qui indique la transmission d'oscillations entre le point de l'excitation extérieure et le capteur qui se trouve en face et, en exploitant le temps de parcours et/ou l'intensité du signal ou en exploitant la fonction de transfert, on tire des déductions sur la position du produit fondu, la nature du produit fondu ou la répartition du produit fondu dans l'enceinte du four.
